(19) Europäisches Patentamt
European Patent Office
Office européen des brevets

(11) **EP 2 076 326 B1**

(12) **EUROPEAN PATENT SPECIFICATION**

(45) Date of publication and mention of the grant of the patent:
**10.12.2014 Bulletin 2014/50**

(21) Application number: **07854059.8**

(22) Date of filing: **15.10.2007**

(51) Int Cl.:
*B01D 53/94* (2006.01)   *B01J 23/30* (2006.01)
*B01J 23/34* (2006.01)   *B01J 23/00* (2006.01)
*B01J 37/03* (2006.01)   *B01J 35/00* (2006.01)

(86) International application number:
**PCT/US2007/081412**

(87) International publication number:
**WO 2008/051752 (02.05.2008 Gazette 2008/18)**

(54) **CE-ZR-R-A-M-O CATALYSTS, ARTICLES COMPRISING THE CE-ZR-R-A-M-O CATALYSTS AND METHOD OF USING THE CE-ZR-R-A-M-O CATALYSTS**

CE-ZR-R-A-M-O-KATALYSATOREN, ARTIKEL MIT DEN CE-ZR-R-A-M-O-KATALYSATOREN SOWIE VERFAHREN ZUR VERWENDUNG DER CE-ZR-R-A-M-O-KATALYSATOREN

CATALYSEURS CE-ZR-R-A-M-O, ARTICLES CONTENANT CATALYSEURS CE-ZR-R-A-M-O ET PROCEDE D'UTILISATION DES CATALYSEURS CE-ZR-R-A-M-O

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.10.2006 US 550861**

(43) Date of publication of application:
**08.07.2009 Bulletin 2009/28**

(73) Proprietor: **Umicore AG & Co. KG**
**63457 Hanau-Wolfgang (DE)**

(72) Inventors:
• **KHARAS, Karl C.**
**Louiseville, CO 80027 (US)**
• **IVANOVA, Alexandra S.**
**Novosibirsk, 630055 (RU)**
• **SLAVINSKAYA, Elena M.**
**Novosibirsk, 630060 (RU)**

• **KUZNETSOV, Pavel A.**
**Novosibirsk, 630060 (RU)**

(56) References cited:
EP-A1- 0 778 071      EP-A1- 1 504 805
EP-A1- 2 072 120      EP-A2- 0 960 649
WO-A1-2005/016496     WO-A2-2006/104805
JP-A- 2003 290 658    JP-A- 2005 238 195
JP-A- 2005 238 196    US-A- 5 552 128
US-A- 6 013 313       US-A- 6 093 378
US-A1- 2002 096 230   US-A1- 2002 173 420
US-A1- 2003 108 465   US-A1- 2004 087 439
US-A1- 2004 126 287   US-A1- 2005 059 547
US-A1- 2005 129 588   US-A1- 2005 282 698
US-A1- 2005 282 698   US-A1- 2006 025 301
US-B1- 6 468 941      US-B1- 6 585 944

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present disclosure relates to catalysts, particularly selective catalytic reduction catalysts comprising cerium, zirconium, and manganese and/or tungsten, and methods of making and using the same.

Up coming emission regulations are driving original equipment manufacturers (OEMs) to incorporate after treatment devices, e.g., exhaust emission control devices, into the exhaust systems in order to comply with these regulations. These exhaust emission control devices could include: catalytic converters (e.g., three-way catalyst, oxidation catalysts, selective catalytic reduction (SCR) catalysts, and the like), evaporative emissions devices, scrubbing devices (e.g., hydrocarbon (HC), sulfur, and the like), particulate filters/traps, adsorbers/absorbers, plasma reactors (e.g., non-thermal plasma reactors), and the like.

A major challenge in meeting the future diesel emission requirements is treating the oxides of nitrogen (NOx) due to the inherently lean exhaust air-to-fuel ratio. One method of treating the NOx is the use of SCR catalysts that use ammonia as the reducing agent. Currently, ammonia is produced on-board a vehicle by injecting aqueous urea into the hot exhaust gas, upstream of the SCR catalyst. The urea decomposes to ammonia in the exhaust system and is used by the SCR catalyst to react with the NOx. The desirable reaction comprises ammonia $NH_3$, nitrogen oxides (NOx), and oxygen ($O_2$) being converted to nitrogen ($N_2$) and water ($H_2O$) in the presence of the catalyst.

Exhaust systems designed in an attempt to meet the emission regulations tend to be complex and highly temperature sensitive. As a result of the temperature sensitivity, many of the components of the system require specific locations in the exhaust system to inhibit deactivation of the component (i.e., of the catalyst in the component), and to attain and retain the catalyst operating temperature.

SCR catalysts comprising mixed oxide material are described in literature. For example, JP 2005-238195A, JP 2005-238196A and EP 2 072 120 A1 describe a Ce-W-Zr systems.

The use of mixed oxide materials in other applications is also known. For example, according to US2005/282698, materials comprising cerium, zirconium, a stabilizer and optionally other rare earths are used as oxygen storage material. According to WO2006/104805, mixed oxides, for example a ceria-zirconia nanocrystalline material which is doped with molybdenum and tungsten is used as catalyst for processing carbonaceous fuels.

WO2005/016496 describes a catalyst structure for treating exhaust gas from a lean burn internal combustion engine which comprises a lean NOx catalyst (LNC) composition associated with at least one partial oxidation catalyst (POC). Both, the LNC and the POC may comprise mixed oxides.

What is continuously needed in the art are simplified systems and/or catalysts that have a wider operating range and therefore enable greater flexibility in the exhaust system design.

SUMMARY

Disclosed herein are NOx reduction catalysts, particulate filters, exhaust treatment systems, and methods of treating a gas stream.

In one embodiment, a NOx reduction catalyst comprises $Ce_a$-$Zr_b$-$R_c$-$A_d$-$M_e$-$O_x$. "R" is Mn. and "A" is selected from the group consisting of W, Mo, Ta, Nb, and combinations comprising at least one of the foregoing "A", wherein "A" comprises W. "M" is a trivalent rare earth ion. a + b + c + d + e = 1. "a" is 0.1 to 0.4; "b" is 0.3 to 0.7; "c" is 0.01 to 0.4; and "d" is 0.05 to 0.2, and "e" is less than or equal to 0.15. The NOx reduction catalyst is capable of reducing NOx.

In one embodiment, a particulate filter comprises a shell and a filter element for removing particulate matter from a gas stream. The filter element is disposed within the shell and comprises a NOx reduction catalyst.

In one embodiment, a method for treating a gas stream comprises introducing the gas stream to a NOx reduction catalyst, and reducing greater than or equal to about 50 vol% of the NOx in the gas stream, based upon a total volume of the NOx initially in the gas stream, wherein the gas stream has a temperature of about 150°C to about 550°C.

In another embodiment, a method of treating a gas stream comprises: introducing exhaust gas to a particulate filter without treating the exhaust gas with an oxidation catalyst, passing the exhaust gas directly from the particulate filter through an optional SCR, and then directly venting the exhaust gas to the environment. If the SCR is present, the SCR and/or the particulate filter comprises a NOx reduction catalyst, and if the SCR is not present, the particulate filter comprises the NOx reduction catalyst.

In one embodiment, a NOx treatment system comprises: a particulate filter disposed to be capable of receiving exhaust gas that has not been treated with an oxidation catalyst, and, optionally, a SCR catalyst disposed downstream and in direct fluid communication with the particulate filter for receiving the gas directly from the particulate filter, and a vent to the environment in direct fluid communication with the SCR, if present, or with the particulate filter if the SCR is not present. If the SCR is present, the SCR and/or the particulate filter comprises a NOx reduction catalyst, and if the SCR is not present, the particulate filter comprises the NOx reduction catalyst.

In one embodiment, a method for making a NOx catalyst, comprises: dissolving cerium salt to form a first acidic solution, dissolving zirconium salt to form a second acidic solution, and dissolving a salt of "R" to form a third acidic solution. A salt of "A" is dissolved to form a basic solution, wherein "A" is selected from the group consisting of W, Mo, Ta, Nb, and combinations comprising at least one of the foregoing A and wherein "A" comprises W. The first acidic solution and second acidic solution and the basic solution and the third acidic solution are mixed to form a precipitate that is dried and calcined to form the catalyst.

The above-described and other features will be appreciated and understood by those skilled in the art from the following detailed description, drawings, and appended claims.

BRIEF DESCRIPTION OF THE DRAWINGS

Refer now to the figures, which are exemplary embodiments, and wherein the like elements are numbered alike.

Figure 1 is a graphical comparison of percent NOx conversion at different inlet temperatures for a Ce-Zr-Mn-W-O catalyst and a MnCe catalyst.

Figure 2 is a graphical comparison of percent NOx conversion at different inlet temperatures for aged Ce-Zr-Mn-W-O catalysts versus fresh and aged $VOx-WO_3-TiO_2$ catalysts.

Figure 3 is a graphical comparison of percent $NH_3$ conversion for at different inlet temperatures aged Ce-Zr-Mn-W-O catalysts versus fresh and aged $VOx-WO_3-TiO_2$ catalysts.

Figure 4 is a graphical comparison of percent NOx conversion at different inlet temperatures for other aged Ce-Zr-Mn-W-O catalysts versus fresh and aged $VOx-WO_3-TiO_2$ catalysts.

Figure 7 is a graphical comparison of the two different Ce-Zr-Mn-W-O catalysts that have been aged at 950°C to a fresh $VOx-WO_3-TiO_2$ catalyst.

Figure 8 is a graphical comparison of Mn catalysts with and without Fe, e.g., comprising various amounts of Ce/Zr/Mn/Fe/La/Y.

Figure 9 is a graphical representation of how titania content affects the Ce-Zr-Mn catalyst.

DETAILED DESCRIPTION

Unmodified manganese catalysts have a narrow window for ammonia SCR because at moderate temperatures (e.g., 300°C); these catalyst begin to oxidize $NH_3$ unselectively to NOx. Titania was a logical element to try because is not volatile at high temperatures, but it doesn't work well with manganese. With respect to tungsten, it seemed unlikely to work since it tends to be volatile at high temperature. For example, V-W-Ti-O catalysts where W(VI) is supported on the surface of anatase titania suffers from the fact that $WO_3$ can volatilize at temperatures of about 600°C. In addition, $WO_3$ is volatile when supported on alumina. So, Mn-W-Al-O catalysts are not expected to be viable after high temperature aging.

Although, to our knowledge, there are no reports of tungsten in oxide systems with a coordination number greater than 6, a tungsten fluorite structure was sought. In fluorite, if all atoms are at normal crystallographic positions, metal atoms are coordinated by 8 oxygen atoms, with the metal atom at the center of a cube of 8 oxygen atoms.

Some embodiments of the Ce-Zr-R-A-M-O compositions (e.g., the Ce-Zr-Mn-W-O catalyst), seemed to solve one or more of the above problems. The temperature window expanded, and no evidence of tungsten volatility at 850°C and 950°C was found. As oppose to merely an intimate mixture of $WO_3$ with another oxide, it is believed that our composition is a new compound. The fact that tungsten appears to go into the fluorite structure in the present compositions is unprecedented. Further, the simultaneous presence of Ce-Zr-Mn-A-O (wherein A is W, Nb, Ta, and/or Mo) in a fluorite is also unprecedented, . Not to be bound by theory, for tungsten, the fluorite structure is believed to be significant because, unlike alumina (either spinel $\gamma-Al_2O_3$ or corundum $\alpha-Al_2O_3$) or titania (either anatase or rutile) or silica (whether as a zeolite, or amorphous silica, or quartz) the fluorite structure accommodates tungsten atoms in lattice positions. In the other oxides, the tungsten is merely mixed with the oxide and not part of the lattice.

The Ce-Zr-R-A-M-O catalyst, e.g., a mesoporous Ce-Zr-Mn-A-M-O fluorite catalyst (optionally comprising both fluorite and $MnWO_4$ phases), is a NOx reduction catalyst, that can attain NOx reduction light-off temperatures of about 150°C, with NOx conversion at about 150°C to about 300°C, and thermal stability up to and exceeding about 850°C. As used herein, a material is "mesoporous" if greater than or equal to 50% of its pore volume is in pores having a size (as measured along a major axis) of 2 nanometers (nm) to 50 nm. This catalyst is particularly useful for NOx reduction and is capable of reducing the NOx without the need for a precious metal catalyst (e.g., without the need to convert some of the NO to $NO_2$). Two common mechanisms for catalytic reduction of NOx, known as the "Standard Reaction" and the "Fast Reaction," are:

$$4NO + 4NH_3 + O_2 \rightarrow 4N_2 + 6H_2O \qquad \text{Standard Reaction}$$

$$2NO + 2NO_2 + 4NH_3 \rightarrow 4N_2 + 6H_2O \qquad \text{Fast Reaction}$$

When the "Standard Reaction" attains better results, a catalyst for forming $NO_2$ is not needed; e.g., no precious metal (e.g., platinum) catalyst is needed with or upstream of the NOx catalyst. The catalyst can be employed as a downstream SCR device, e.g., and underfloor catalyst or disposed after a particulate filter, or can be combined with the particulate filter to reduce NOx and also eliminate soot.

If the SCR device is downstream of the Ce-Zr-R-A-M-O catalyst that functions as a particulate filter, the SCR catalyst may be any of various materials known to reduce NOx with ammonia, such as zeolites containing copper or iron, or vanadia (optionally with tungsta or molybdena) supported on anatase titania. In another embodiment the Ce-Zr-R-A-M-O catalyst can be disposed in the SCR, downstream of a particulate filter.

The catalyst formula is $Ce_a$-$Zr_b$-$R_c$-$A_d$-$M_e$-$O_x$. The subscripts a, b, c, d, e, and x, represent atomic fractions, subject to the proviso that (a + b + c + d + e = 1). In addition, the value of "a" is 0.1 to 0.4 and even more specifically, 0.3 to about 0.4. "b" is 0.3 to 0.7, or, more specifically, 0.3 to 0.6, and even more specifically, 0.35 to 0.5. "c" is 0.1 to 0.4, and even more specifically, 0.2 to 0.35. "d" is 0.05 to 0.2, or, more specifically, 0.05 to 0.15, and even more specifically, 0.07 to 0.12. "e" is less than or equal to 0.15, or, more specifically, 0.03 to 0.1. The precise value for "x" (and therefore the precise value for $\delta$) depends on the type of metal component, its charge, atomic fraction, and the requirement that the metal oxide have a neutral overall charge. Examples of the catalyst include, for example, $Ce_{0.35}$-$Zr_{0.35}$-$Mn_{0.25}$-$W_{0.05}$-O and $Ce_{0.30}$-$Zr_{0.30}$-$Mn_{0.30}$-$W_{0.1}$-O.

"M", which is optional, comprises trivalent rare earth ion(s) (e.g., dysprosium (Dy), erbium (Er), ytterbium (Yb), holmium (Ho), erbium (Er), thulium (Tm), lanthanum (La), yttrium (Y), lutetium (Lu), samarium (Sm), and gadolinium (Gd), as well as combinations comprising at least one of the foregoing. In some embodiments, the catalyst is free of La and Y. As defined herein, "free" means that La and Y were not added to the catalyst, but may exist as an impurity in a reagent used to make the catalyst.

The $Ce_a$-$Zr_b$-$R_c$-$A_d$-$M_e$-$O_x$ catalyst can be formed in various fashions. For example, water soluble salts of cerium, zirconium, "M", and "R" can be prepared in a sufficiently acidic solution to dissolve the salts (e.g., a slightly acidic solutions, such as a pH of less than or equal to about 2.0, or, more specifically, a pH of about 0.5 to about 2.0). For W, however, a water soluble salt of the tungsten, preferably a sodium tungstate or ammonium tungstate is prepared, e.g., by dissolving the salt in water to give a solution with a pH of about 7.5 to about 10.0, or, more specifically, about 7.5 to about 9.0. A salt (e.g., a sodium and/or ammonium salt) of "A" can be dissolved into the basic solution (e.g., having a pH of about 7.5 to about 10.0). For example, for the cerium, zirconium, "R" and "M", the salts can be nitrates, acetates, and/or chlorides (preferably nitrates and/or acetates), with nitric acid or acetic acid being suitable acids for acidifying this solution. For "A", the salt can be alkali or ammonium salts (preferably sodium salts), with sodium hydroxide, potassium hydroxide, or tetraalkylammonium hydroxide optionally present for maintaining a suitably basic solution.

The salts can separately be dissolved in the appropriate solutions and then combined. Alternatively, the acidic solutions can be formed as one solution and the basic solutions can be formed as one solution. In one example, cerium (III) nitrate hydrate can be dissolved in water without additional acid, e.g., to yield a solution with a pH of about 1.2 to about 1.4. Zirconyl nitrate hydrate can be dissolved in water with a bit of nitric acid, e.g., to yield a solution with a pH of about 0.7, while manganese nitrate can be dissolved without extra acid, e.g., to yield a solution with a pH of about 1.4. These solutions can, optionally, be initially combined for form a single acidic solution for combination with the basic solution(s), or each can be combined directly with the basic solution(s) in a single step. With respect to the basic solution, $Na_2WO_4$, for example, can be dissolved without extra base, e.g., to yield a solution with a pH of about 8.5, and/or $[NH_4]_{10}W_{12}O_{41}$ can be dissolved without extra base, e.g., to yield a solution with a pH of about 7.8 - 8.0. Sodium or ammonium molybdates, tantalates, or niobates can be similarly dissolved. As with the acidic solution(s), the basic solutions can be initially combined to form a single basic solution, or can be individually added directly to the acidic solution(s) to form the precipitate.

These solutions can be mixed, e.g., by adding the basic solution(s) to the acidic solution(s), to form an initial precipitate. Optional heating, e.g., to about 50°C to about 90°C, of one or more of the solutions, prior to mixing, can be employed. Precipitation is completed by adding NaOH or KOH to raise the pH, e.g., to about 8.8 to about 9.2. The solution is then optionally heated to a temperature of about 50°C to about 90°C, or, more specifically, about 60°C to about 80°C (e.g., about 70°C), and stirred for less than or equal to about 6 hours or so (e.g., about 1 to about 6 hours, or, more specifically, about 1.5 to about 2.5 hour (e.g., about 2 hours). The precipitate can then be washed to remove soluble salts, dried (e.g., actively and/or passively), and calcined. Calcination can be at a temperature of less than or equal to about 700°C, or, more specifically, about 600°C to about 700°C, or, yet more specifically, about 650°C to about 700°C.

It is possible to make and use precursor solutions with concentrations of $XO_2$ of 100 grams per liter (g/liter) or more (wherein "X" represents Ce, Zr, "R" and "M"). In this nomenclature of $XO_2$, the amount of $CeO_2$, $ZrO_2$, and $MnO_2$ equivalent to the Ce(III) salt (e.g., Ce(III) nitrate), zirconyl salt (e.g., zirconyl nitrate), and Mn(II) salt (e.g., Mn(II) nitrate) is calculated and put into the precursor solution (e.g., nitrate solution). As regards "R", an initial solution containing a tungsten concentration equivalent to up to 20 g/liter $WO_3$ is prepared. For example, the concentration of tungsten, in its original basic solution prior to addition to the $XO_2$ acidic solution(s), can be equivalent to about 15 g/liter to about 25 g/liter $WO_3$ (e.g., about 20 g/liter $WO_3$), while the concentration of Ce, Zr, Mn, and "M" can each be about 50 g $XO_2$/liter to about 100 g $XO_2$/liter.

Also, it is noted that while precursor nitrates were used in preparing the above samples, it is possible to use other water-soluble salts of cerium, zirconium, and manganese including, for example, acetate and/or chloride salts. If chloride salts are used, the precipitate will be washed to ensure essentially complete removal of sodium chloride.

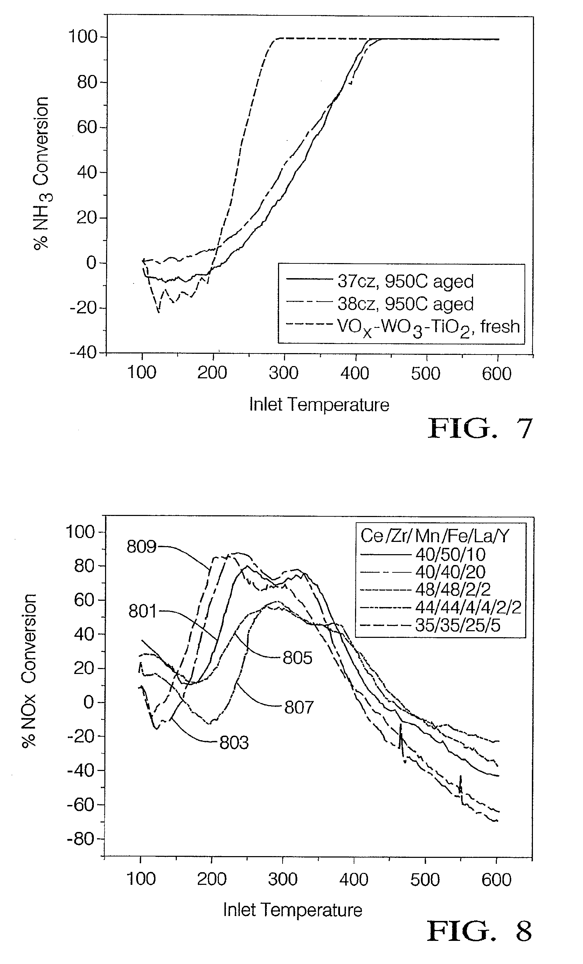

It is noted that not all materials provide desirable catalysts. As can be seen in Figure 8, a six-component Ce-Zr-La-Y-Mn-Fe catalyst (line 807), while possessing a thermally stable fluorite structure after treatment at 1,000°C, is less active for SCR than similar less complex compositions. Only low levels (about 2 mol%) of both Mn and Fe were present in that material. Higher concentrations of manganese are also shown in Figure 8. Increasing the Mn mol fraction from 2% to 30% resulted in gradual broadening, to lower temperatures, of the NOx reduction window (lines 801, 803, 805, and 809).

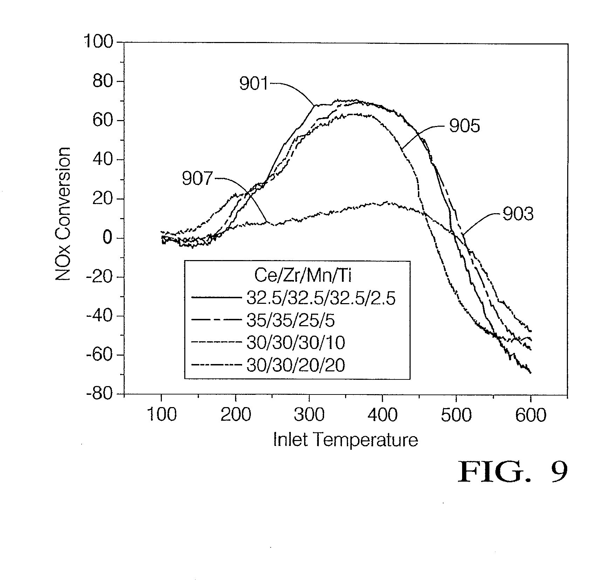

Similarly, employment of titanium dioxide ($TiO_2$), e.g., the use of various amounts of $TiO_2$ in the composition, did not improve the performance as is illustrated in Figure 9. Figure 9 actually illustrates that the titania is failing to decrease the parasitic oxidation at temperatures of greater than or equal to about 450°C. As can be seen, as the amount of titania in the catalyst increases, the NOx conversion of the catalyst decreases (line 901 (least amount of titania (2.5 mol%)) to line 907 (most amount of titania (20 mol%)).

The catalyst structure can affect the performance, e.g., NOx and/or $NH_3$ conversion. Both $(NH_4)_{10}W_{12}O_{41}$ and $Na_2(WO_4)$ have proven useful in the synthesis of the Ce-Zr-R-A-M-O catalyst. It is noted that in some of the synthesized catalysts, the catalyst contains both fluorite and $MnWO_4$ phases. Next, we can make a rough estimate of the ratio of fluorite to $MnWO_4$ in $Ce_{0.3}Zr_{0.3}Mn_{0.3}W_{0.1}O_2$ that has been calcined at 700°C based on our X-ray diffraction results. We examine the 200 fluorite reflection and the 011 $MnWO_4$ reflection. The most intense feature in the X-ray diffraction patterns occurs at about 30° 2-theta in our diffraction pattern; this diffraction intensity results from contributions of fluorite (100) and $MnWO_4$ (1-bar 1 1). So, we base our analysis on reflections due solely to fluorite, namely the (200) reflection occurring at about 34° 2-theta) and (011) for $MnWO_4$, occurring at about 26.3° 2-theta. We determine maximum intensity of these two reflections and weight them according to the relative intensity of these reflections, as reported on JCPDS cards 13-0434 (for $MnWO_4$) and 43-1002 (for $CeO_2$). JCPDS is an acronym for the Join Committee on Powder Diffraction Standards, now associated with the International Centre for Diffraction Data. The $MnWO_4$/fluorite ratio can, roughly, be described as:

$$\left( \frac{I_{011}/60}{I_{200}/27} \right) = 0.155$$

The $MnWO_4$/fluorite ratio can be less than or equal to about 0.25, or, more specifically, less than or equal to about 0.15.

An exemplary synthesis method comprises dissolving an appropriate amount of $Na_2WO_4$ in an aqueous alkali hydroxide solution (e.g., NaOH and/or KOH solution). Separately, nitrates of cerium, zirconium, and manganese, (e.g., $Ce(NO_3)_3$ hydrate, $ZrO(NO_3)_2$ hydrate, and $Mn(NO_3)_2$) can be dissolved in an aqueous acidic acid that optionally contains a bit of nitric acid to promote dissolution. These solutions are slowly combined and the Ce-Zr-Mn-W-O material is precipitated. The precipitate is washed and calcined.

When the Ce-Zr-R-A-M-O catalyst is used in the SCR device, e.g., in an underfloor location, the SCR device comprises a porous support with the Ce-Zr-R-A-M-O catalyst located therein and/or thereon. Examples of porous support materials include cordierite, metallic supports, silicon carbide (SiC), alumina (e.g., zirconium toughened alumina), and the like, as well as combinations comprising at least one of the foregoing materials. The porous support can be in the form of a monolith, sponge, foil, and so forth, and may also comprise a protective coating, e.g., of phosphate or metal phosphate.

The Ce-Zr-R-A-M-O catalyst can, alternatively or in addition, be located in the particulate filter. The particulate filter can comprise any filter and design capable of removing particulate matter from the exhaust stream and preventing the emission of such particulate matter into the atmosphere. In addition, when the Ce-Zr-R-A-M-O catalyst is also disposed in the filter, the filter is capable of reducing NOx. For example, after calcination at 600°C, some of the Ce-Zr-R-A-M-O catalysts are capable of NOx conversion down to less than 50 parts per million by volume (ppm) (i.e., 85% conversion) can be attained over a temperature of about 200°C to about 415°C.

As noted above, the Ce-Zr-R-A-M-O catalyst can be used in a particulate filter. A particulate filter generally comprises a shell and a filter element with a retention material disposed therebetween. The filter element removes particulate matter from the exhaust stream. The filter element can comprise any material designed for use in the environment and which can remove particulate matter from a gaseous stream. Some possible materials include ceramics (e.g., extruded ceramics), metals (e.g., extruded, sintered metals), and silicon carbide; and so forth, as well as combinations comprising at least one of the foregoing materials, such as cordierite, aluminum oxide, aluminum phosphate, sintered steel (such as sintered stainless steel). For example, the filter element can comprise a gas permeable ceramic material having a honeycomb structure consisting of a plurality of channels, e.g., parallel channels. The channels can be divided into alternating inlet channels and outlet channels. The inlet channels are open at an inlet end of the filter element and closed at the opposite end of the filter element, while outlet channels are closed at the inlet end and open at the outlet end. The inlet and outlet channels are separated by porous longitudinal sidewalls that permit the exhaust gases to pass from the inlet channels to the outlet channels along their length.

Optionally, a composition appropriate for soot oxidation can be disposed in one or more of the inlet channel(s), while the Ce-Zr-R-A-M-O catalyst can be disposed in one or more of the outlet channel(s). These materials may be wash coated, imbibed, impregnated, physisorbed, chemisorbed, precipitated, sprayed, or otherwise applied to the filter element. Depending upon the location of the Ce-Zr-R-A-M-O catalyst in the particulate filter, the composition for soot oxidation may also be chosen for its reactivity with other exhaust components. For example, a soot oxidation composition may be chosen that does not unselectively oxidize ammonia (or urea) without coreaction of NOx, within the temperature range of interest (e.g., 150°C to about 500°C or so).

Soot oxidation catalysts are any material capable of oxidizing soot, with an ignition temperature below about 550°C, that does not have activity to oxidize $NH_3$ at temperatures below about 600°C. Possible examples of such catalysts are those of the catalysts discussed in U.S. Patent Publication No. 2005-0282698 that lack ammonia oxidation activity. Many base metal catalyst compositions will provide this sort of activity. In general, soot oxidation catalysts containing platinum (Pt) and/or palladium (Pd) will not be suitable, however.

If an oxidation catalyst is employed, as with the SCR device, the oxidation catalyst comprises a substrate, catalytic material, and shell, with a retention material disposed between the substrate and the shell. The catalyst material(s) for the oxidation catalyst can be a catalyst capable of oxidizing at least one of HC and CO to water and $CO_2$, respectively, and preferably that does not oxidize NO to $NO_2$. The substrate can comprise materials employed in the particulate filter and/or the SCR device. Although the substrate can have any size or geometry, the size and geometry are preferably chosen to optimize surface area in the given exhaust emission control device. Typically, the substrate has a honeycomb geometry, with the combs through-channel having any multi-sided or rounded shape, with substantially square, triangular, pentagonal, hexagonal, heptagonal, or octagonal, or similar geometries preferred due to ease of manufacturing and increased surface area.

As mentioned above, seemingly due to the mechanism of operation of the present catalyst, the catalyst has improved NOx reduction and ammonia conversion when operated under the "Standard Reaction" conditions. As a result exhaust from a diesel engine can optionally be passed from the manifold directly through the particulate filter and from the particulate filter, directly through an optional SCR and then directly vented to the environment (i.e., without the use of additional or other exhaust treatment devices). In this embodiment, the Ce-Zr-R-A-M-O catalyst can be disposed in the particulate filter and/or in the SCR. Regardless of the catalysts location, ammonia (and/or urea) is also introduced to the catalyst, by introduction directly to the device comprising the catalyst, or introduction to the exhaust stream upstream thereof. Alternately, ammonia could be produced on-board through thermal desorption of ammonia from an ammoniacal salt, such as $Mg(NH_3)_6Cl_2$, contained in a dedicated ammonia delivery system. Once the catalyst has attained a temperature of greater than or equal to about 150°C, it attains light-off, converting the $NH_3$ and NOx to nitrogen and water.

If the catalyst is located in the particulate filter, e.g., in the outlet channels of the filter, the exhaust stream flows into the inlet channels and passes through the walls of the channels, thereby filtering out soot and particulate matter from the stream. As the stream passes through the outlet channels, the NOx and ammonia are converted to nitrogen and water. After the stream exits the filter, it can optionally be treated to oxidize HC and CO in the stream prior to venting to the environment.

When an oxidation catalyst is employed, it is preferable to employ an oxidation catalyst that does not convert the NO to $NO_2$, but oxidizes the HC and CO. From the oxidation catalyst, the stream can pass through a particulate filter to remove the soot and/or other particulate matter. If the Ce-Zr-R-A-M-O catalyst is not located in the filter, the NOx is reduced downstream in a SCR comprising the Ce-Zr-R-A-M-O catalyst.

The following examples are provided merely to further illustrate the present Ce-Zr-R-A-M-O catalyst and not to limit the scope hereof.

EXAMPLES

Example 1: Sample 1 is a $Ce_{0.35}Zr_{0.35}Mn_{0.25}W_{0.05}O_2$ catalyst.

168.3 milliliter (ml) solution of ammonium para-tungstate, $(NH_4)_{10}W_{12}O_{41}$ (concentration 12.5 grams (g) $WO_3$ per liter (1)), was poured to a solution obtained by mixing of 220.5 ml $Ce(NO_3)_3$, 158 ml $ZrO(NO_3)_2$, and 79.5 ml $Mn(NO_3)_2$ with concentrations 50 g $MO_2/l$. The pouring of ammonium para-tungstate was performed at room temperature (20-23°C) at the rate of 10 milliliters per minute (ml/min) under intensive stirring. After ammonium para-tungstate was added to the mixed nitrate solution, the resultant suspension was heated to 70°C, and then, 2N KOH was added until attaining pH 9 $\pm$ 0.1. The suspension was stirred under these conditions for 2 hours. The suspension was filtered, and the precipitate was washed with distilled water until there was an absence of nitrates in the filtrate. Finally, the precipitate was washed with ethanol. The precipitate was dried, first in air and then in a drying furnace at 110°C to 120°C for 12 to 14 hours, and, after that, was calcined at 600°C for 4 hours.

Example 2: Sample 2 is a $Ce_{0.3}Zr_{0.3}Mn_{0.3}W_{0.1}O_2$ catalyst.

336.5 ml solution of ammonium para-tungstate, $(NH_4)_{10}W_{12}O_{41}$ (concentration 12.5 g $WO_3/l$), was poured to a solution obtained by mixing of 187 ml $Ce(NO_3)_3$, 134 ml $ZrO(NO_3)_2$ and 95 ml $Mn(NO_3)_2$ with concentrations 50 g $MO_2/l$. The pouring of ammonium para-tungstate was performed at room temperature (20-23°C) at the rate of 10 ml/min under intensive stirring. After ammonium para-tungstate was added to the mixed nitrate solution, a suspension obtained was heated to 70°C, and then, 2N KOH was added until attaining pH 9 $\pm$ 0.1. The suspension was stirred under these conditions for 2 hours. The suspension was filtered, and the precipitate was washed with distilled water till the absence of nitrates in the filtrate. Finally, the precipitate was washed with ethanol. The precipitate was dried first in air and then in a drying furnace at 110°C to 120°C for 12 to 14 hours, and, after that, was calcined at 600°C for 4 hours.

When calcined at low temperatures (e.g., less than or equal to 700°C), both materials (Samples 1 and 2) comprise a fluorite structure. Additionally, $MnWO_4$ was detected in Sample 2 after calcination at 700°C, but not after calcination at 600°C, while $MnWO_4$ is not detected after calcination at 600°C or 700°C in Sample 1.

Fresh and/or aged Samples 1 and 2, as well as reference catalysts (as is explained in each figure), were tested. The aging conditions were 16 hours (hr) at the aging temperature in an environment comprising 28 parts per million by volume (ppm) $SO_2$, 4.5 volume percent (vol%) $H_2O$, 14 vol% $O_2$, balance $N_2$ and Ar. The evaluation conditions that were then employed to test the catalysts comprised: 350 ppm NO, 350 ppm $NH_3$, 4.5 vol% $H_2O$, 14 vol% $O_2$, balance He.

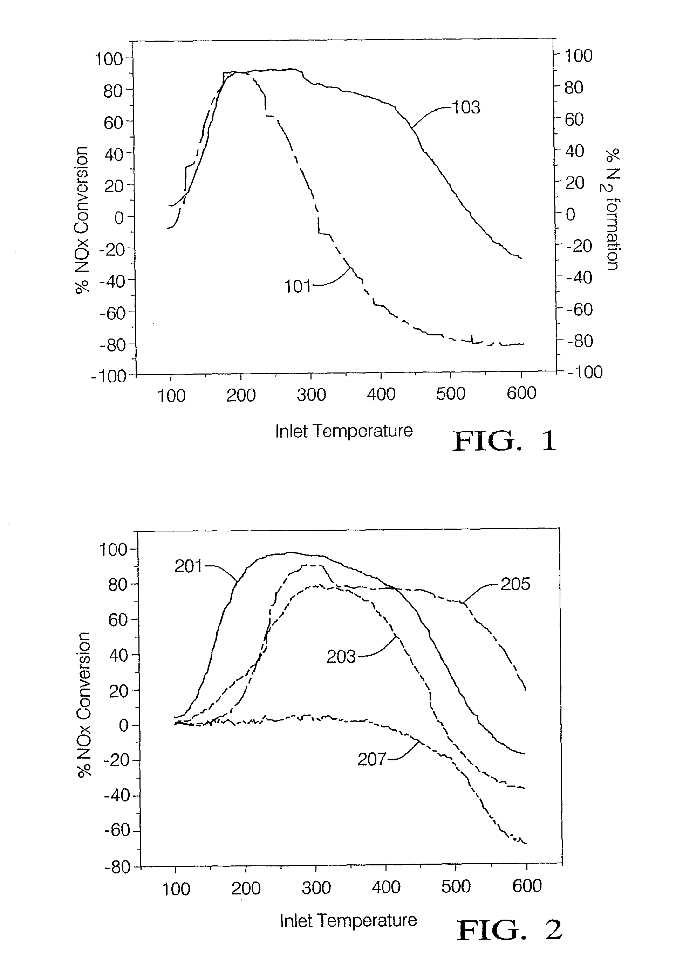

Figure 1 graphically illustrates a comparison of NOx reduction for Sample 2 compared to a MnCe material. MnCe contains, formally, about 50 wt% $MnO_2$ and 50% $CeO_2$. X-ray diffraction analysis reveals two phases: $CeO_2$ and $Mn_2O_3$. A contraction of the fluorite $CeO_2$ lattice parameter indicates some doping of ceria with partial occupancy by manganese atoms at the cerium position. As is evident from the graphs, the MnCe catalyst (line 101) had a NOx reduction window of about 150°C to about 275°C, and then actually oxidized the $NH_3$ to $NO_x$ at temperatures of about 300°C and greater. Sample 2 (line 103) had a NOx reduction window of about 150°C to about 475°C, with oxidation of $NH_3$ to $NO_x$ not occurring until temperatures exceeding 500°C and even exceeding 525°C. Addition of W to the composition broadened the NOx reduction window to higher temperatures. NOx reduction windows of greater than or equal to about 350°C and even greater than or equal to about 400°C (e.g., about 200°C to about 600°C or so), can be attained with a Ce-Zr-W-A-M-O catalyst, where both "A" and "M" are optional, e.g., $Ce_{0.45}$-$Zr_{0.45}W_{0.1}$-$O_{2+\delta}$ that has been sintered at 600°C.

Figure 2 compares NOx conversion for Sample 2 after aging at 700°C (line 201), and Sample 2 after aging at 850°C (line 203), to fresh and 850°C aged $VOx$-$WO_3$-$TiO_2$ reference catalyst (lines 205 and 207, respectively). Inspection revealed that the reference catalyst completely deactivated for NOx reduction after aging at 850°C (line 207). The 700°C aged Sample 2 (line 201) had better performance than even the fresh reference catalyst (line 205) while the 850°C aged Sample 2 (line 203) had only slightly worse performance than fresh reference catalyst (line 205).

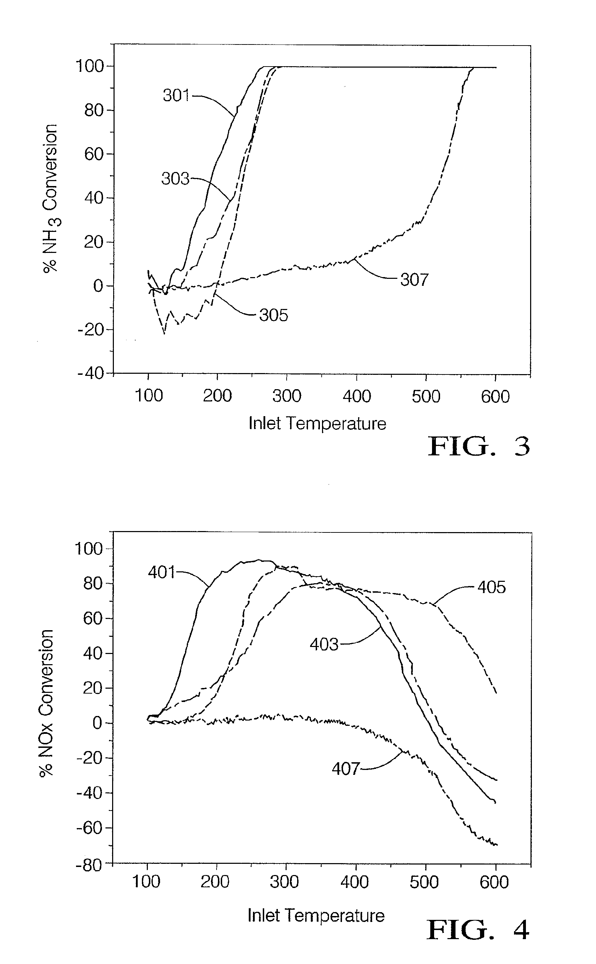

Figure 3 compares $NH_3$ conversion for Sample 2 after aging at 700°C (line 301), and Sample 2 after aging at 850°C (line 303), to fresh and 850°C aged $VOx$-$WO_3$-$TiO_2$ reference catalyst (lines 305 and 307, respectively). $NH_3$ conversion for aged Sample 2 is slightly better than $NH_3$ conversion for the fresh reference catalyst. After aging, the reference catalyst deactivates very substantially for $NH_3$ conversion (line 307). Fresh reference catalyst (line 305) attained nearly 100% $NH_3$ conversion at temperatures of greater than 275°C, with light-off at about 240°C, while the aged reference catalyst (line 307) did not attained nearly 100% $NH_3$ conversion until temperatures of greater than 550°C, with light-off at about 525°C. Sample 2, even aged at 850°C (line 303), attained $NH_3$ conversion at temperatures of greater than or equal to about 275°C with light-off at around 240°C. The Sample 2 that was only aged to 700°C (line 301) actually attained light-off at temperatures of less than or equal to about 200°C, with $NH_3$ conversion at temperatures of greater than or equal to about 260°C.

Figure 4 shows analogous trends involving Sample 1. This figure compares NOx conversion for Sample 1 after aging at 700°C (line 401), and Sample 1 after aging at 850°C (line 403), to fresh and 850°C aged $VOx$-$WO_3$-$TiO_2$

reference catalyst (lines 405 and 407, respectively). Inspection revealed that the reference catalyst completely deactivated for NOx reduction after aging at 850°C (line 407). The 700°C aged Sample 1 (line 401) had better performance than even the fresh reference catalyst (line 405) while the 850°C aged Sample 1 (line 403) had only slightly worse performance than fresh reference catalyst (line 405).

Figure 7 shows that aging of Samples 1 and 2 at 950°C causes some loss of NH3 conversion performance; e.g., the fresh reference catalyst is better at $NH_3$ conversion than the aged Samples 1 and 2. However, Samples 1 and 2, even aged at 950°C, exhibit substantially better $NH_3$ conversion (e.g., at temperatures of less than 500°C) than the reference catalyst aged at 850°C. (Also see Figure 3)

In one embodiment, a NOx reduction catalyst consists essentially of $Ce_a-Zr_b-R_c-A_d-M_e-O_x$ fluorite, wherein only elements that do not reduce NOx conversion can additionally be incorporated into the catalyst. "a" is 0.1 to 0.4, or, more specifically, 0.3 to 0.4. "b" is 0.3 to 0.7, or, more specifically, 0.3 to 0.6, and even more specifically, 0.35 to 0.5. "c" is 0.1 to about 0.4, and even more specifically, 0.2 to 0.35. "d" is 0.05 to 0.2, or, more specifically, 0.05 to 0.15, and even more specifically, 0.07 to 0.12. "e" is less than or equal to 0.15, or, more specifically, 0.03 to 0.1. The NOx reduction catalyst is capable of reducing NOx (e.g., promoting a chemical reaction between NOx and reduced nitrogen species (such as ammonia) to make, predominantly, nitrogen ($N_2$)).

The catalyst disclosed herein has low light-off temperatures of less than or equal to about 200°C, even less than or equal to about 175°C, e.g., about 140°C to about 160°C. Catalyst also has a wider operating range of greater than or equal to about 200°C, or, more specifically, greater than or equal to about 300°C, and even greater than or equal to about 400°C.

Additionally, the Ce-Zr-R-A-M-O catalyst disclosed herein is unexpectedly highly thermally stable (e.g., stable at temperatures of greater than or equal to 700°C), and retains NOx reduction capabilities even after 16 hours of aging under hydrothermal conditions at a temperature of 850°C. Since this catalyst exhibits greater NOx reduction capabilities without the presence of $NO_2$, an oxidation catalyst upstream of this NOx catalyst can be eliminated while high NOx conversion is attained. It is further noted that the present catalysts show good tolerance to sulfur (e.g., $SO_2$ and $SO_3$) and superior oxygen atom transport, e.g., compared to neat ceria. Hence, it is believed that the Ce-Zr-R-A-M-O catalysts will function as effective soot oxidation catalysts as well as a NOx reduction catalyst. Therefore, a single material can be used to perform the two more difficult functions of diesel exhaust gas detoxification: removal of NOx and removal of carbonaceous particulate matter.

For example, diesel emissions control systems that do not employ the Ce-Zr-R-A-M-O catalyst disclosed herein, and that utilize SCR and particulate traps, will often have, as a first catalyst in the emissions control system, an oxidation catalyst. This catalyst (typically Pt based) serves two or three functions: oxidizing CO and HC coming from the engine, oxidizing NO to $NO_2$ (e.g., for the FAST NOx reaction), and serving as a heat source to heat up the particulate trap to temperatures sufficient to cause its regeneration by oxidizing carbon stored in the trap. The heating is accomplished by injecting sufficient (relatively large, compared to normal engine operation) amounts of hydrocarbons upstream of the engine as a late pulse during the combustion cycle (so that the hydrocarbons emerge from the cylinder largely uncombusted) and/or in the exhaust pipe, upstream of the oxidation catalyst. The hydrocarbons, when oxidized over the oxidation catalyst, increase the temperature of the exhaust gas sufficient to heat the particulate trap to soot regeneration temperatures.

Downstream of this oxidation catalyst is generally a particulate trap followed by an SCR catalyst (since the SCR catalyst generally fails at temperatures below particulate trap regeneration temperatures); e.g., zeolite-based SCR catalysts and vanadia-titania-based catalysts fail at a temperature below about 750°C. However, since the Ce-Zr-Mn-A-M-O catalyst disclosed herein are more temperature tolerant, they are better able to withstand the middle position (between the oxidation catalyst and the particulate trap).

Not to be bound by theory, the Ce-Zr-R-A-M-O catalysts (Ce-Zr-Mn-A-M-O catalysts) appear to reduce NO more effectively than $NO_2$, thereby allowing the use of Pd oxidation catalysts (at a substantial cost savings to the use of Pt catalysts) to heat exhaust to temperatures needed to regenerate a particulate trap. Pd catalysts are less effective than Pt catalysts at oxidizing NO to $NO_2$ which appears desirable for the new catalysts disclosed herein. In other words, unlike iron zeolite catalysts and $V-W-TiO_2$ catalysts used for mobile applications, the Ce-Zr-R-A-M-O catalyst does not require the use of Pt oxidation catalysts to convert NO to $NO_2$ because it is active for the "Standard Reaction". This substantially reduces cost.

The Ce-Zr-R-A-M-O catalysts (e.g., Ce-Zr-Mn-A-M-O catalysts) could be coated onto a particulate trap, allowing the combination of the SCR and particulate matter (PM) control with a single coated substrate, permitting helpful reductions in system complexity and cost. After the SCR and particulate trap catalysts, an additional oxidation catalyst can be used to oxidize CO slipping from the particulate trap during high temperature regeneration and to oxidize any ammonia that slips from the SCR catalyst.

Not to be bound by theory, the present composition enables a process for reducing NOx, where the NOx is mostly NO (e.g., greater than or equal to about 60 vol% NO, based on the total vol% of the NOx), using ammonia such that at temperatures below about 300°C, the characteristics of NOx reduction improve as the $NO/NO_2$ ratio increases.

The NOx reduction characteristics of the catalyst at temperatures below 300°C are better when the NOx is about 95 vol% NO, 5 vol% $NO_2$ compared to when the NOx is 50 vol% NO, 50 vol% $NO_2$. Hence, for many embodiments of the Ce-Zr-R-A-M-O catalyst, the NOx reduction characteristics at temperatures below about 300°C are better when NOx is greater than or equal to about 75 vol% NO (e.g., less than or equal to 25 vol% $NO_2$) than when NOx is less than or equal to 50 vol% NO (e.g., 50 vol% $NO_2$), based on the total volume of the NOx. It is noted that NOx in normal engine is exhaust is typically greater than 75 vol% NO and usually greater than 90 vol% NO. As a result, the present catalyst benefits from the normal exhaust conditions, able to use the exhaust NOx as it, without converting the NO/$NO_2$ ratio. The present catalyst can reduce greater than or equal to about 50% of NOx in a gas stream, or more specifically, greater than or equal to about 80 vol% of NOx in a gas stream, and, even more specifically, greater than or equal to about 90 vol% of NOx in a gas stream (based upon a total volume of NOx in the gas stream), in at a temperature of about 150°C to about 550°C, or, more specifically, the temperature is about 150°C to about 400°C. Additionally, the present catalyst can have a NOx reduction temperature window of about greater than or equal to about 250°C, even greater than or equal to about 300°C, and even greater than or equal to about 350°C, where greater than or equal to about 50%, and even greater than or equal to about 70% NOx conversion can be attained.

Ranges disclosed herein are inclusive and combinable (e.g., ranges of "up to about 25 wt%, or, more specifically, about 5 wt% to about 20 wt %", is inclusive of the endpoints and all intermediate values of the ranges of "about 5 wt% to about 25 wt%," etc). As used herein, "combination" is inclusive of blends, mixtures, alloys, oxides, copolymers, reaction products, and the like, as applicable. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants).

It is intended that the invention not be limited to the particular embodiment disclosed as the best mode contemplated for carrying out this invention, but that the invention will include all embodiments falling within the scope of the appended claims.

## Claims

**1.** A NOx reduction catalyst, comprising:

$Ce_a$-$Zr_b$-$R_c$-$A_d$-$M_e$-$O_x$
wherein

"R" is Mn
and
"A" is selected from the group consisting of W, Mo, Ta, Nb, and combinations comprising at least one of the foregoing "A"; and
wherein "A" comprises W;
"M" is a trivalent rare earth ion;
$a + b + c + d + e = 1$;
"a" is 0.1 to 0.4;
"b" is 0.3 to 0.7;
"c" is 0.1 to 0.4;
"d" is 0.05 to 0.2; and
"e" is less than or equal to 0.15; and

wherein the catalyst is capable of reducing NOx.

**2.** The catalyst of Claim 1, wherein the trivalent rare earth ion is selected from the group consisting of Sm, Gd, Dy, Er, Yb, Ho, Er, Tm, Lu, and combinations comprising at least one of the foregoing.

**3.** The catalyst of Claim 1, wherein "M" is free of La and Y.

**4.** The catalyst of Claim 1, wherein "e" is 0.03 to 0.1.

**5.** The catalyst of Claim 1, having a fluorite structure.

**6.** The catalyst of Claim 5, wherein the catalyst is a mesoporous catalyst.

**7.** The catalyst of Claim 1, comprising fluorite and $MnWO_4$ phases.

**8.** The catalyst of Claim 7, wherein a ratio of the $MnWO_4$ phase to the fluorite phase is less than or equal to about 0.25.

**9.** The catalyst of Claim 8, wherein the ratio is less than or equal to about 0.15.

**10.** Method of treating a gas stream, comprising:

introducing the gas stream to a NOx reduction catalyst according to one or more of claims 1 to 9; and
reducing greater than or equal to 50 vol% of the NOx in the gas stream, based upon a total volume of the NOx initially in the gas stream,
wherein the gas stream has a temperature of 150°C to 550°C.

**11.** The method of Claim 10, wherein the gas stream comprises greater than or equal to 60 vol% NO, based upon a total volume of NOx in the gas.

**12.** The method of Claim 11, wherein the gas stream comprises greater than or equal to 75 vol% NO.

**13.** The method of Claim 12, wherein the gas stream comprises greater than or equal to 90 vol% NO.

**14.** The method of Claim 10, comprising reducing greater than or equal to 80 vol% of the NOx in a gas stream.

**15.** A particulate filter, comprising:

a shell;
a filter element for removing particulate matter from a gas stream, wherein the filter element is disposed within the shell, wherein the filter element comprises a NOx reduction catalyst according to one or more of claims 1 to 9.

**16.** A NOx treatment system, comprising:

introducing exhaust gas to a particulate filter without treating the exhaust gas with an oxidation catalyst; and
passing the exhaust gas directly from the particulate filter through an optional SCR and then directly venting the exhaust gas to the environment;
wherein if the SCR is present, the SCR and/or the particulate filter comprises a NOx reduction catalyst;
wherein if the SCR is not present, the particulate filter comprises the NOx reduction catalyst; and
wherein the NOx reduction catalyst is according to one or more of claims 1 to 9.

**17.** A NOx treatment system, comprising:

a particulate filter disposed to be capable of receiving exhaust gas that has not been treated with an oxidation catalyst;
optionally a SCR disposed downstream and in direct fluid communication with the particulate filter for receiving the gas directly from the particulate filter; and
a vent to the environment in direct fluid communication with the SCR, if present, or with the particulate filter if the SCR is not present;
wherein if the SCR is present, the SCR and/or the particulate filter comprises a NOx reduction catalyst;
wherein if the SCR is not present, the particulate filter comprises the NOx reduction catalyst; and
wherein the NOx reduction catalyst is according to one or more of claims 1 to 9.

**18.** A NOx reduction catalyst, consisting essentially of the catalyst according to claim 5.

**Patentansprüche**

1. NOx-Reduktionskatalysator, umfassend:

$Ce_a$-$Zr_b$-$R_c$-$A_d$-$M_e$-$O_x$
worin

"R" für Mn steht und
"A" aus der Gruppe bestehend aus W, Mo, Ta, Nb und Kombinationen, die mindestens eines der obigen "A" umfassen, ausgewählt ist; und
wobei "A" W umfasst;
"M" für ein dreiwertiges Seltenerdmetallion steht;
$a + b + c + d + e = 1$;
"a" für 0,1 bis 0,4 steht;
"b" für 0,3 bis 0,7 steht;
"c" für 0,1 bis 0,4 steht;
"d" für 0,05 bis 0,2 steht; und
"e" kleiner gleich 0,15 ist; und

wobei der Katalysator zur Reduktion von NOx befähigt ist.

2. Katalysator nach Anspruch 1, wobei das dreiwertige Seltenerdmetallion aus der Gruppe bestehend aus Sm, Gd, Dy, Er, Yb, Ho, Er, Tm, Lu und Kombinationen, die mindestens eines der obigen Ionen umfassen, ausgewählt ist.

3. Katalysator nach Anspruch 1, wobei "M" frei von La und Y ist.

4. Katalysator nach Anspruch 1, wobei "e" für 0,03 bis 0,1 steht.

5. Katalysator nach Anspruch 1, der eine Fluorit-Struktur aufweist.

6. Katalysator nach Anspruch 5, wobei es sich bei dem Katalysator um einen mesoporösen Katalysator handelt.

7. Katalysator nach Anspruch 1, umfassend Fluorit- und $MnWO_4$-Phasen.

8. Katalysator nach Anspruch 7, wobei ein Verhältnis der $MnWO_4$-Phase zu der Fluorit-Phase kleiner gleich etwa 0,25 ist.

9. Katalysator nach Anspruch 8, wobei das Verhältnis kleiner gleich etwa 0,15 ist.

10. Verfahren zur Behandlung eines Gasstroms, bei dem man:

den Gasstrom in einen NOx-Katalysator nach einem oder mehreren der Ansprüche 1 bis 9 einträgt und größer gleich 50 Vol.-% des NOx in dem Gasstrom, bezogen auf ein Gesamtvolumen des anfangs in dem Gasstrom vorliegenden NOx, reduziert,
wobei der Gasstrom eine Temperatur von 150°C bis 550°C aufweist.

11. Verfahren nach Anspruch 10, bei dem der Gasstrom größer gleich 60 Vol.-% NO, bezogen auf ein Gesamtvolumen von NOx in dem Gas, umfasst.

12. Verfahren nach Anspruch 11, bei dem der Gasstrom größer gleich 75 Vol.-% NO umfasst.

13. Verfahren nach Anspruch 12, bei dem der Gasstrom größer gleich 90 Vol.-% NO umfasst.

14. Verfahren nach Anspruch 10, bei dem man größer gleich 80 Vol.-% des NOx in einem Gasstrom reduziert.

15. Partikelfilter, umfassend:

eine Schale;

ein Filterelement zur Entfernung von teilchenförmigem Material aus einem Gasstrom, wobei das Filterelement in der Schale angeordnet ist, wobei das Filterelement einen NOx-Reduktionskatalysator nach einem oder mehreren der Ansprüche 1 bis 9 umfasst.

16. NOx-Behandlungssystem, bei dem man:

Abgas in einen Partikelfilter einträgt, ohne das Abgas mit einem Oxidationskatalysator zu behandeln; und
das Abgas direkt von dem Partikelfilter durch eine fakultative SCR führt und dann das Abgas direkt in die Umgebung ablässt;
wobei dann, wenn die SCR vorhanden ist, die SCR und/oder der Partikelfilter einen NOx-Reduktionskatalysator umfasst;
wobei dann, wenn die SCR nicht vorhanden ist, der Partikelfilter den NOx-Reduktionskatalysator umfasst; und
wobei der NOx-Reduktionskatalysator einem oder mehreren der Ansprüche 1 bis 9 entspricht.

17. NOx-Behandlungssystem, umfassend:

einen Partikelfilter, der so angeordnet ist, dass er das Abgas, das nicht mit einem Oxidationskatalysator behandelt worden ist, empfangen kann;
gegebenenfalls eine SCR, die stromabwärts und in direkter Fließverbindung mit dem Partikelfilter angeordnet ist, zum direkten Empfangen des Gases aus dem Partikelfilter; und
einen Auslass an die Umgebung, der mit der SCR, wenn vorhanden, oder mit dem Partikelfilter, wenn die SCR nicht vorhanden ist, in direkter Fließverbindung steht;
wobei dann, wenn die SCR vorhanden ist, die SCR und/oder der Partikelfilter einen NOx-Reduktionskatalysator umfasst;
wobei dann, wenn die SCR nicht vorhanden ist, der Partikelfilter den NOx-Reduktionskatalysator umfasst; und
wobei der NOx-Reduktionskatalysator einem oder mehreren der Ansprüche 1 bis 9 entspricht.

18. NOx-Reduktionskatalysator, der im Wesentlichen aus dem Katalysator nach Anspruch 5 besteht.

**Revendications**

1. Catalyseur de réduction de NOx, comprenant :

$Ce_a-Zr_b-R_c-A_d-M_e-O_x$
dans lequel
"R" représente Mn
et
"A" est choisi dans le groupe constitué par W, Mo, Ta, Nb, et des combinaisons comprenant au moins un des "A" précédents ; et
dans lequel "A" comprend W ;
"M" représente un ion de terre rare trivalent ;
a+b+c+d+e = 1 ;
"a" a une valeur de 0,1 à 0,4 ;
"b" a une valeur de 0,3 à 0,7 ;
"c" a une valeur de 0,1 à 0,4 ;
"d" a une valeur de 0,05 à 0,2 ; et
"e" est inférieur ou égal à 0,15 ; et
dans lequel le catalyseur est capable de réduire NOx.

2. Catalyseur selon la revendication 1, dans lequel l'ion de terre rare trivalent est choisi dans le groupe constitué par Sm, Gd, Dy, Er, Yb, Ho, Er, Tm, Lu, et des combinaisons comprenant au moins un des précédents.

3. Catalyseur selon la revendication 1, dans lequel "M" ne comporte pas de La et de Y.

4. Catalyseur selon la revendication 1, dans lequel "e" a une valeur de 0,03 à 0,1.

5. Catalyseur selon la revendication 1, possédant une structure fluorite.

**6.** Catalyseur selon la revendication 5, dans lequel le catalyseur est un catalyseur mésoporeux.

**7.** Catalyseur selon la revendication 1, comprenant des phases fluorite et $MnWO_4$.

**8.** Catalyseur selon la revendication 7, dans lequel le rapport entre la phase $MnWO_4$ et la phase fluorite est inférieur ou égal à environ 0,25.

**9.** Catalyseur selon la revendication 8, dans lequel le rapport est inférieur ou égal à environ 0,15.

**10.** Procédé de traitement d'un courant de gaz, comprenant les étapes consistant à :

introduire le courant de gaz sur un catalyseur de réduction de NOx selon une ou plusieurs des revendications 1 à 9 ; et
réduire une quantité supérieure ou égale à 50 % en volume du NOx dans le courant de gaz, par rapport au volume total du NOx se trouvant initialement dans le courant de gaz,
dans lequel le courant de gaz a une température de 150°C à 550°C.

**11.** Procédé selon la revendication 10, dans lequel le courant de gaz comprend une quantité supérieure ou égale à 60 % en volume de NO, par rapport au volume total de NOx dans le gaz.

**12.** Procédé selon la revendication 11, dans lequel le courant de gaz comprend une quantité supérieure ou égale à 75 % en volume de NO.

**13.** Procédé selon la revendication 12, dans lequel le courant de gaz comprend une quantité supérieure ou égale à 90 % en volume de NO.

**14.** Procédé selon la revendication 10, comprenant la réduction d'une quantité supérieure ou égale à 80 % en volume du NOx dans un courant de gaz.

**15.** Filtre particulaire, comprenant :

une enveloppe ;
un élément filtrant pour éliminer la matière particulaire d'un courant de gaz, dans lequel l'élément filtrant est placé à l'intérieur de l'enveloppe, dans lequel l'élément filtrant comprend un catalyseur de réduction de NOx selon une ou plusieurs des revendications 1 à 9.

**16.** Système de traitement de NOx, comprenant les étapes consistant à :

introduire un gaz d'échappement sur un filtre particulaire sans traiter le gaz d'échappement avec un catalyseur d'oxydation ; et
faire passer le gaz d'échappement directement du filtre particulaire à travers une RCS optionnelle et ensuite dégager directement le gaz d'échappement dans l'environnement ;
dans lequel, si la RCS est présente, la RCS et/ou le filtre particulaire comprend un catalyseur de réduction de NOx ;
dans lequel, si la RCS n'est est pas présente, le filtre particulaire comprend le catalyseur de réduction de NOx ; et
dans lequel le catalyseur de réduction de NOx est conforme à une ou plusieurs des revendications 1 à 9.

**17.** Système de traitement de NOx, comprenant :

un filtre particulaire placé de façon à pouvoir recevoir un gaz d'échappement qui n'a pas été traité avec un catalyseur d'oxydation ;
éventuellement une RCS placée en aval et en communication fluide directe avec le filtre particulaire pour recevoir le gaz directement depuis le filtre particulaire ; et
un orifice de dégagement vers l'environnement en communication fluide directe avec la RCS, si elle est présente, ou avec le filtre particulaire si la RCS n'est est pas présente ;
dans lequel, si la RCS est présente, la RCS et/ou le filtre particulaire comprend un catalyseur de réduction de NOx ;
dans lequel, si la RCS n'est est pas présente, le filtre particulaire comprend le catalyseur de réduction de NOx ; et

dans lequel le catalyseur de réduction de NOx est conforme à une ou plusieurs des revendications 1 à 9.

18. Catalyseur de réduction de NOx, essentiellement constitué du catalyseur selon la revendication 5.

FIG. 1

FIG. 2

FIG. 3

FIG. 4

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005238195 A
- JP 2005238196 A
- EP 2072120 A1
- US 2005282698 A
- WO 2006104805 A
- WO 2005016496 A
- US 20050282698 A